Europäisches Patentamt

European Patent Office

Office européen des brevets

(11) Veröffentlichungsnummer: **0 385 119 B1**

## EUROPÄISCHE PATENTSCHRIFT

(45) Veröffentlichungstag der Patentschrift: **03.08.94**

(21) Anmeldenummer: **90101879.6**

(22) Anmeldetag: **31.01.90**

(51) Int. Cl.5: **B01D 61/36**, B01D 17/02

(54) **Verfahren zur Trennung und Rückgewinnung von Komponenten von Gemischen mittels Pervaporation.**

(30) Priorität: **25.02.89 DE 3905924**

(43) Veröffentlichungstag der Anmeldung:
**05.09.90 Patentblatt 90/36**

(45) Bekanntmachung des Hinweises auf die
Patenterteilung:
**03.08.94 Patentblatt 94/31**

(84) Benannte Vertragsstaaten:
**CH DE DK FR GB IT LI NL**

(56) Entgegenhaltungen:
**EP-A- 0 143 129**
**EP-A- 0 154 746**
**EP-A- 0 216 181**
**EP-A- 0 264 113**

(73) Patentinhaber: **GKSS-FORSCHUNGSZENTRUM**
**GEESTHACHT GMBH**
**Max-Planck-Strasse**
**D-21502 Geesthacht(DE)**

(72) Erfinder: **Wenzlaff, Axel**
**Bundesstrasse 91**
**D-2050 Escheburg(DE)**
Erfinder: **Behling, Dieter, Dr.**
**Brammweg 14**
**D-2000 Hamburg 55(DE)**
Erfinder: **Böddeker, Karl W., Dr.**
**Dorfstrasse 32 a**
**D-2413 Breitenfelde(DE)**

(74) Vertreter: **Niedmers, Ole, Dipl.-Phys. et al**
**Patentanwälte**
**Niedmers & Schöning**
**Stahltwiete 23**
**D-22761 Hamburg (DE)**

**Beschreibung**

Die Erfindung betrifft ein Verfahren zur Trennung und Rückgewinnung der Komponenten aus organischen Verbindungen und Wasser in einem Pervaporationsprozeß mit Hilfe von Membranen.

Gemische dieser Art bestehen beispielsweise aus mit Wasser gesättigten oder teilgesättigten und nur teilweise wasserlöslichen organischen Verbindungen, die daneben Wasserphasen enthalten, die mit darin nur geringfügig löslichen und organischen Komponenten belastet sind, einschließlich Emulsionen. Gemische dieser Art bilden sich beispielsweise als Bodensumpf in Tanklagern, in Öl- und Lösemittelfängern von Abwasserführungen, bei Prozessen der chemischen Industrie, als Reaktionsprodukte an Synthesen, in der Umlaufflüssigkeit von Flüssigkeitsringvakuumpumpenständen, bei der Hochdruckreinigung oder Ultraschallreinigung, bei der Tankreinigung von stationären und fahrenden Tankanlagen und bei der Bergung von Flüssigtankladungen havarierter bzw. verunglückter Tankfahrzeuge durch die Katastrophendienste aus Gewässern, Wasserläufen und Boden.

Allgemein wird angestrebt, die organischen chemischen Verbindungen aus dem Gemisch zu entfernen, wobei einerseits Wasser mit hohem Reinheitsgrad und andererseits die organischen Verbindungen mit hohem Reinheitsgrad zu trennen sind, so daß das Wasser als Brauchwasser einer uneingeschränkten Benutzung zugeführt werden kann ebenso wie die gewonnenen organischen Verbindungen einem Wiedereinsatz für technische Zwecke zugeführt werden können.

Bei den erfindungsgemäß zu behandelnden organischen Chemikalien handelt es sich um solche mit geringer Wasserlöslichkeit, d.h. aliphatische und aromatische Kohlenwasserstoffe wie Hexan, Toluol oder Gemische dieser Gruppen wie Treibstoffe für Verbrennungsmaschinen, Lösungsmittel mit begrenzter Wasserlöslichkeit wie höhere Alkohole, Ester, Ketone, sofern sie begrenzt wasserlöslich sind, Äther und andere Grundstoffe der organischen Chemie wie auch der Polymerchemie, beispielsweise Styrol.

Die Aufbereitung derartiger Gemische geschieht in der Regel durch Trennung der Gemische in eine Wasserphase, die organisch gesättigt ist und in die organische Phase, die wassergesättigt erhalten wird, wobei der Trennvorgang im eigentlichen Sinne durch Absetzen oder Zentrifugieren erfolgt. Die weitere Aufbereitung dieser nicht so verwendbaren Phasen geschieht im Stand der Technik auf unterschiedlichste Weise. Die organischen Verbindungen können durch Destillation, Extraktion, Sorption oder Schleppmittel-Destillation entwässert werden, wobei in der Regel erneut Nebenprodukte entstehen, die ihrerseits entsorgt bzw. behandelt werden müssen, was sehr nachteilig ist. In Fällen besonders schwerer Rückgewinnbarkeit werden deshalb solche Gemische pyrolytisch oder durch Hochtemperaturverbrennung in Spezialöfen in zu handhabende Folgeprodukte umgewandelt, d.h. abgebaut. Die Wasserphase wird in gleichen Verfahren in getrennten Anlagen mit hohen Kosten ähnlich gereinigt aber auch durch Verdünnen mit anderem Abwasser in der Konzentration der gelösten organischen Verbindungen abgesenkt und in kleiner Menge in die Abwassernetze abgeleitet oder im Fall der Tankwäsche an Schiffen auf hoher See gelenzt. Die letzteren Entsorgungsweisen werden wegen ihrer hohen ökologischen Unverträglichkeit in Zukunft durch Gesetze unterbunden.

Grundsätzlich ist es ebenfalls bekannt, Trennaufgaben dieser Art mittels eines Pervaporationsprozesses mit Hilfe von Membranen durchzuführen. So ist es beispielsweise aus der US-A-4 405 409 bekannt, organische Flüssigkeiten mit Hilfe der Destillation mit nachgeschalteter Pervaporation mit Hilfe von Membranen zu trennen. Dabei wird Wasser als Destillationssumpf abgegeben und die entwässerten organischen Verbindungen werden als Produkt der dortigen Membranpervaporationsstufen ausgetragen.

Bei anderen bekannten Trennverfahren, beispielsweise nach Rautenbach und Janisch (Chem.-Ing.-Technik 59 (1987) Nr. 3, Seiten 187-196), wird ein Verfahren beschrieben, bei dem ein Stoffgemisch durch Umkehrosmose in Kombination mit Pervaporation getrennt wird. Wegen der hohen osmotischen Drücke sind aber auch hier der Wasserreinigung unüberwindbare Grenzen gesetzt, so daß die verbleibende Restmenge an Lösungsmittel im Wasser oberhalb 2000 ppm liegt. Ein weiterer Nachteil dieses bekannten Verfahrens besteht auch in der völlig unterschiedlichen technischen Arbeitsweise der derart kombinierten Verfahren, denn die Umkehrosmose arbeitet bei tiefen Temperaturen und extrem hohem Druck, während die Pervaporation ein thermisches Verfahren mit Vakuumverdampfung auf der Membranrückseite ist.

Es ist Aufgabe der vorliegenden Erfindung, ein Verfahren zur Trennung und Rückgewinnung der Komponenten von Gemischen aus organischen Verbindungen und Wasser zu schaffen, die Mischungslücken aufweisen, wobei mit dem Verfahren sowohl das Wasser als auch die organischen Substanzen mit so hoher Reinheit geschaffen werden können, daß die jeweilige verbleibende Verunreinigung unter 10 ppm an jeweiligem Fremdstoff bleibt.

Gelöst wird die Aufgabe gemäß der Erfindung dadurch, daß zunächst das Gemisch in eine organisch belastete Wasserphase I und in eine wassergesättigte organische Phase II aufgetrennt wird, daß anschließend die organisch belastete Wasserphase I und die wassergesättigte organische Phase II jeweils getrennt parallelen Pervaporationsprozessen unterworfen werden, wobei die dabei entstehenden Retentate einerseits als Wasser III und andererseits als organisches Fluid IV abgegeben werden und die bei den Pervaporationsprozessen entstehenden Permeate dem zu trennenden Gemisch erneut zugeführt werden.

Der Vorteil des erfindungsgemäßen Verfahrens liegt im wesentlichen darin, daß der Prozeß zur Trennung und Rückgewinnung der Komponenten aus den Gemischen ausschließlich mittels Pervaporation erfolgt und kostspielige und vielfach nicht miteinander ohne weiteres kombinierbare andere Verfahren vollständig entbehrlich sind. Ein weiterer Vorteil des erfindungsgemäßen Verfahrens liegt darin, daß der gesamte Prozeß bei tiefen Temperaturen, d.h. bei Temperaturen unterhalb des Siedepunkts der beteiligten Stoffe betrieben werden kann, d.h. Drücke oberhalb des Normaldrucks bei der Ausführung des Verfahrens nicht nötig sind. Schließlich ist es bei dem erfindungsgemäßen Verfahren von Vorteil, daß die verfahrensgemäß entstehenden Retentate, d.h. die Nutzprodukte des Verfahrens in der gewünschten Reinheit erzeugt werden und nachfolgende Reinigungsstufen, die bisher erforderlich waren, überflüssig sind.

Schließlich werden verfahrensgemäß die Permeate, d.h. die durch die Membranen bei der Ausführung der Pervaporationsprozesse hindurch geänderten Komponentengemische, wieder dem zu trennenden Gemisch zugeführt, so daß diese erneut zusammen mit dem dem Verfahren von außen zugeführten Gemisch nach Art eines Kreisprozesses beigegeben werden.

Gemäß einer vorteilhaften Ausgestaltung des Verfahrens werden nach der Trennung des Gemisches in eine organisch belastete Wasserphase und in eine wassergesättigte organische Phase diese zunächst jeweils getrennt parallelen Abscheideprozessen unterworfen, was beispielsweise dadurch geschehen kann, daß beide getrennten Phasen einem Abscheider für Wasser und einem für organische Verbindungen zugeführt werden, wobei in diesen noch nachträglich ausgetretenes Wasser oder solches, das durch nicht ausreichend sorgfältige Schichttrennung mitgerissen wurde, zurückgehalten wird bzw. das zur Abtrennung mitgerissener nicht gelöster organischer abgesonderter Tropfen dient.

Die Abscheideprozesse können vorteilhafterweise mittels Schwerkraft und/oder einem Koaleszer ausgeführt werden, wobei es ebenfalls vorteilhaft ist, daß die bei den Abscheideprozessen entstehenden Permeate, ebenso wie den eigentlichen Pervaporationsprozeß verlassenden Permeate, dem zu trennenden Gemisch erneut zugeführt werden. Es findet somit eine lückenlose Rückführung in den Kreisprozeß statt.

Gemäß einer weiteren vorteilhaften Ausgestaltung des Verfahrens wird bzw. werden das/die Permeat(e) vor der erneuten Zuführung in das zu trennende Gemisch unter Vakuum kondensiert. Dabei können grundsätzlich alle beliebigen geeigneten Arten der Kondensation Anwendung finden.

Bei bestimmten vorteilhaften Ausgestaltungen des Verfahrens kann es bei unterschiedlichem Verhältnis der einzelnen Produktströme des Verfahrens sinnvoll sein, die einzelnen parallelen Raffinationsschritte, d.h. den Pervaporationsprozeß für die Trennung der wassergesättigten organischen Phase und den der organisch belasteten Wasserphase bei unterschiedlichem Vakuum ablaufen zu lassen, da mittels des derart modifizierten Verfahrens eine Anpassung eines Verfahrens an eine mengenmäßig größere Stoffgruppe gegenüber einer anderen kleineren Stoffgruppe sehr viel leichter möglich ist.

Vorzugsweise werden bei einer Art des Verfahrens die Permeate beider Phasen vor der Kondensation gemischt, so daß letztlich nur eine einzige Kondensationseinrichtung vorgesehen zu werden braucht. Grundsätzlich ist es jedoch auch möglich, jeweils getrennt für die von der wassergesättigten organischen Phase und die von der organisch belasteten Wasserphase kommenden Permeate eine Kondensationseinrichtung vorzusehen. Dieser letztere Fall ist besonders dann von Wichtigkeit, wenn die Kondensierbarkeit der Permeate unterschiedlich ist und die Leistungscharakteristik der eingesetzten Membranen für die beiden parallel verlaufenden Pervaporationsprozesse unterschiedliches Vakuum verlangen. Auf alle Fälle ist es aber die kostengünstigere und komplexere Form des Verfahrens, beide von den unterschiedlichen Pervaporationsprozessen kommenden Permeate zusammenzuführen und an einem einzigen Kondensations- und Vakuumsystem zu betreiben.

Die kondensierten Permeate werden vorteilhafterweise vor der Zuführung in das zu trennende Gemisch gemeinsam gesammelt, so daß diese, da sie aus Wasser und organischen Stoffen bestehen, sich wiederum teilweise ineinander lösen und in zwei Phasen trennen, deren eine aus mit Wasser gesättigtem organischem Stoff besteht, das bis zur Löslichkeitsgrenze mit der organischen Substanz angereichert ist. Das gesammelte Permeat wird dann vorteilhafterweise kontinuierlich oder periodisch dem durch das Verfahren zu trennenden Gemisch zugeführt.

Das Rohgemisch bzw. das Gemisch, das dem Verfahren zur Trennung zugeführt wird, wird vorteilhafterweise mittels Schwerkraft in die organisch belastete Wasserphase und in die wassergesättigte organische Phase aufgetrennt, wobei diese Art des Verfahrens die normalerweise betätigte kostengünstigere gegenüber anderen Trennungsmethoden ist.

Bei einer vorteilhaften anderen Ausgestaltung des Verfahrens wird das Gemisch mittels eines Zentrifugenprozesses oder eines Koaleszers in die organisch belastete Wasserphase und in die wassergesättigte organische Phase aufgetrennt, wobei diese Verfahrensvariante dann gewählt wird, wenn das zu trennende Gemisch eine Emulsion ist oder zur Emulsionsbildung neigt.

Das gesamte Verfahren kann vorteilhafterweise dadurch selbsttätig ausgeführt werden, indem die Retentate auf ihnen enthaltene Permeatanteile zur Ermittlung einer Regelgröße zyklisch selbsttätig analysiert werden, wobei in Abhängigkeit von der ermittelten Regelgröße die Zulaufgeschwindigkeit der organisch belasteten Wasserphase und der wassergesättigten organischen Phase zu den jeweiligen Pervaporationsprozessen geregelt wird.

Um auf einfache Weise mit dem Verfahren auch höchsten Ansprüchen in bezug auf einen angestrebten Umweltschutz zu genügen, wird vorteilhafterweise bei unmittelbar nach dem Austritt aus den Pervaporationsprozessen automatisch erkannten flüssigen Permeatanteilen der Verfahrensablauf automatisch wenigstens teilweise unterbrochen, was ebenfalls vorteilhafterweise dann gilt, wenn bei als nicht typisch erkanntem Druck auf der Permeatseite der Pervaporationsprozesse der Verfahrensablauf automatisch wenigstens teilweise unterbrochen wird.

Die Erfindung wird nun unter Bezugnahme auf die nachfolgenden schematischen Zeichnungen anhand mehrerer Ausführungsbeispiele beschrieben. Darin zeigen:

Fig. 1    den Grundaufbau einer Anlage zur Ausführung des Verfahrens,

Fig. 2    eine gegenüber der Darstellung von Fig. 1 modifizierte Anlage mit kombinierter Druck- und Vakuumkondensation und

Fig. 3    eine Anlage, in der die Trennung des Gemisches im ersten Verfahrensschritt durch eine Zentrifuge/ einen Koaleszer erfolgt.

Die Anlage 10, mit der typischerweise das erfindungsgemäße Verfahren ausgeführt wird, wird nun zunächst grundsätzlich im Aufbau zum besseren Verständnis des Verfahrensablaufes beschrieben.

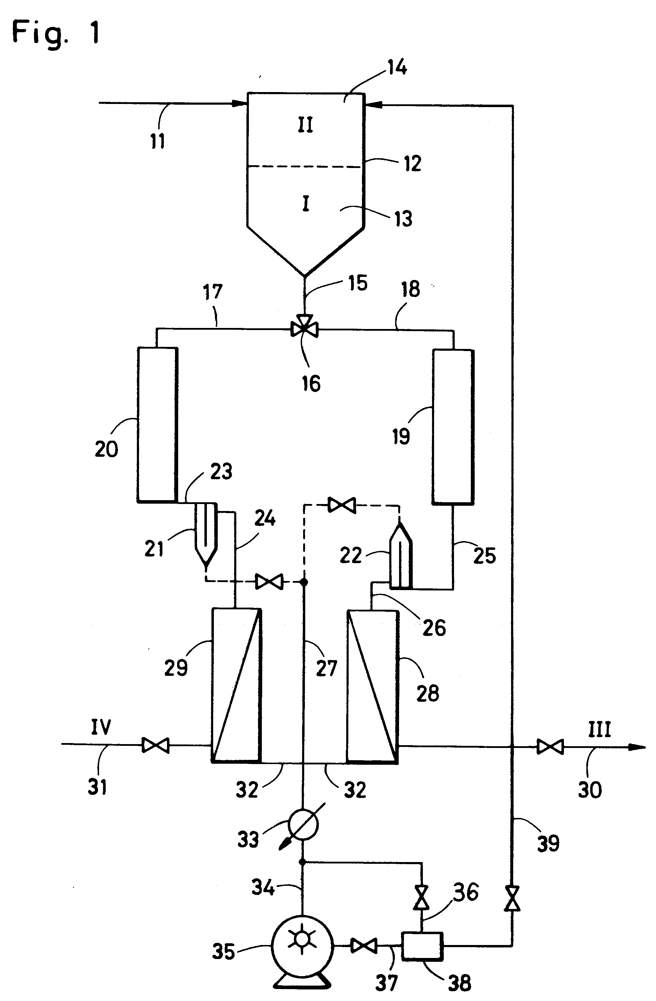

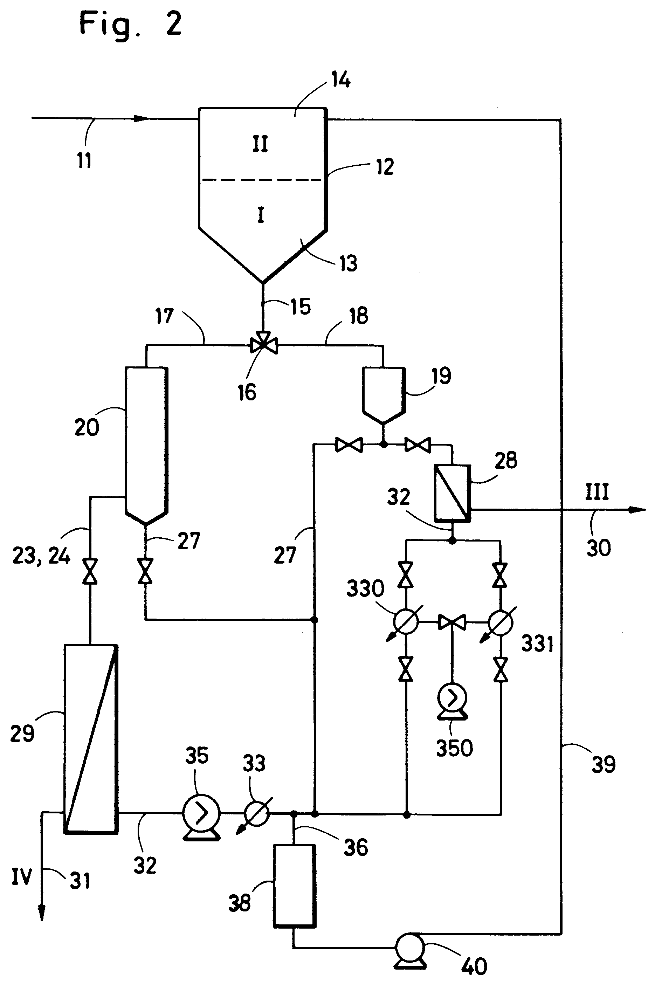

Ein beispielsweise durch Filtration, Sedimentation oder auf geeignete andere Weise von festen Verunreinigungen befreites Gemisch 11 wird, vgl. Figuren 1 und 2, auf einen Phasenseparationsbehälter 12 gegeben. Dort erfolgt gemäß Verfahrensschritt a eine Schichtentrennung des Gemisches 11 aus nur bedingt miteinander lösbaren Stoffen. Die Aufutrennung des Gemisches in eine organisch belastete Wasserphase I, 13 und in eine wassergesättigte organische Phase II, 14 erfolgt infolge der Schwerkraft automatisch. Die wässrige Phase I, 13 enthält in Sättigungskonzentration gelöste organische Komponenten, die organische Phase II, 14 ist mit Wasser gesättigt. Über eine Leitung 15 wird zunächst über ein nachgeschaltetes 3-Wegeventil 16 über die Leitung 18 die organisch belastete Wasserphase I, 13 auf einen Puffertank 19 gegeben und nachfolgend durch Umschaltung des 3-Wegeventils 16 die wassergesättigte organische Phase II, 14 über die Leitung 17 auf den Puffertank 20. Nachfolgend ist der Absetzbehälter 12 erneut zur Aufnahme des zu trennenden Gemisches 11 bereit.

Aus dem Puffertank 20 wird ein stetiger auf geeignete Weise geregelter Flüssigkeitsstrom über einen Wasserabscheider 21 auf die Pervaporationseinrichtung 29 gegeben. Im Abscheider 21 wird noch nachträglich ausgetretenes Wasser oder solches, das durch eine nicht ausreichend sorgfältige Schichttrennung im Phasenseparationsbehälter bzw. im Puffertank 20 mitgerissen wurde, zurückgehalten.

Die Pervaporationseinrichtung 29 ist mit solchen Membranen ausgestattet, die Wasser aufnehmen können und dieses aus der über sie strömenden organischen Flüssigkeit entziehen können. Gleichzeitig findet auch ein nicht in jedem Falle zu verhindernder Eintritt organischer Komponenten in die Membran statt, dieser Anteil kann jedoch durch die Auswahl geeigneter Membranen auf einen verhältnismäßig kleinen Wert zurückgedrängt werden, so daß das organische Fluid IV über die Retentatabflußleitung 31 die Pervaporationseinrichtung 29 in der gewünschten (wasserarmen) Form verläßt. Die Membranfläche in der Pervaporationseinrichtung 29 wird so ausgelegt, daß die organische Flüssigkeit den Reinheitsanforderungen eine handelsüblichen Produkts dieser Art entspricht bzw. die Forderungen an den Restwassergehalt bei einer Rückführung in einen chemischen Prozeß einhält.

Die Permeatseite der Pervaporationseinrichtung 29 ist über eine Leitung 32 mit einem Kondensator 33 verbunden, dessen Rückseite wiederum über eine Leitung 34 mit einer Vakuumpumpe 35 verbunden ist. Durch Anlegen eines Vakuums an den Permeatraum der Pervaporationseinrichtung 29 werden die von den Membranen aufgenommene Anteile Wasser ebenso wie die unerwünscht begleitenden, in die Membran eingetretenen organischen Anteile durch rückseitiges Ausdampfen in den Permeatraum transportiert und gelangen über den Kondensator 33 in einen Sammelbehälter 38.

Die organisch belastete Wasserphase I, 13, die sich im Puffertank 19 befindet, wird ähnlich behandelt wie die wassergesättigte organische Phase II, 14 im Puffertank 20. Sie läuft zur Abtrennung mitgerissener, nicht gelöster, suspendierter organischer Tropfen durch den als Fett-, Benzin- oder Lösemittelfänger ausgebildeten Abscheider 22, der in der Regel ein sogenannter Schwerkraftabscheider oder Koaleszer ist. Der den Abscheider 22 über die Leitung 26 verlassende Wasserstrom enthält dann nur noch gelöste Mengen der organischen Substanz und tritt in dieser Form in die Pervaporationseinrichtung 28 ein. Die Flüssigkeit wird in der Pervaporationseinrichtung 28 über solche Membranen geleitet, die in erster Linie organische Flüssigkeiten aufnehmen, wobei auch hier eine gleichzeitige Aufnahme von verhältnismäßig geringen Wassermengen durch die Membran nicht ganz verhindert werden kann. Auch hier kann jedoch dieser unerwünschte Effekt durch geeignete Auswahl geeigneter Membranen auf ein dem Verfahren zuträgliches Maß reduziert werden.

Nach Verlassen der grundsätzlich berechenbaren Membranüberströmfläche in der Pervaporationseinrichtung 28 hat das Retentat III Wasser die gewünschte Reinheit, wobei der Reinheitsgrad entsprechend den Membranparametern einstellbar ist.

Die Permeatseite der Pervaporationseinrichtung 28 wird wiederum über die Leitung 32, den Kondensator 33 und die Leitung 34 mit der Vakuumpumpe 35 verbunden, d.h. das Permeat wird durch kontinuierliches Ausdampfen mit Hilfe der Vakuumpumpe 35 und Kondensieren dem Sammelbehälter 38 über die Leitung 36 zugeführt.

Im Verhältnis zu den Produktströmen des Verfahrens, d.h. das über die Retentatabflußleitung 30 gewonnene Wasser III und das über die Retentatabflußleitung 31 gewonnene organische Fluid IV, ist die in der Anlage 10 insgesamt anfallende, im Sammelbehälter 38 gesammelte Permeatmenge klein und beträgt typisch deutlich unter 10 % und kann je nach Reinheitsforderung und der Art der zu trennenden Gemische 11 auch unter 1 % liegen. Das im Sammelbehälter 38 gesammelte Permeat wird kontinuierlich oder periodisch in den Absetzbehälter 12 über die Leitung 39 zur Schließung des Kreisprozesses einer weiteren Aufarbeitung bzw. Trennung zurückgeführt.

Es ist ein wesentliches sehr vorteilhaftes Kennzeichen des erfindungsgemäßen Verfahrens, daß keine Nebenprodukte gebildet werden, wie dieses bei Destillationssümpfen in der Regel der Fall ist und daß keine zusätzlichen Stoffe in das Verfahren eingebracht werden, deren Entsorgung weitere Probleme mit sich bringt, wie dieses beispielsweise bei den bekannten Extraktionsverfahren und den Absorptionsverfahren typisch ist. Die Besonderheit des erfindungsgemäßen Verfahrens ist auch die sehr vorteilhafte Möglichkeit, dieses bereits bei Raumtemperatur zu betreiben. Das hat besondere Bedeutung bei solchen Stoffen, die bei erhöhten Temperaturen bereits unerwünschte Veränderungen erleiden, wie z.B. Styrol, das jede Wärmezufuhr und/oder Sauerstoffzufuhr durch Polymerisation quittiert.

Bei dem in Fig. 2 dargestellten Ausführungsbeispiel, bei dem gleiche Teile der Anlage 10, wie sie in Fig. 1 dargestellt ist, mit gleichen Bezugsziffern versehen worden sind, sind jedoch gegenüber dem Ausführungsbeispiel von Fig. 1 die parallelen Anlagen zur Trennung der organisch belasteten Wasserphase I und der wassergesättigten organischen Phase II als Wechselanlage ausgeführt und mit je einem eigenen Kondensatorsystem 33; 330 (331) und je einer eigenen Vakuumpumpe 35; 350 ausgestattet. Eine derartige Anlage 10 wird vorzugsweise dann benutzt, wenn beispielsweise der Mengenanteil der einen Stoffgruppe (organische Komponenten) gegenüber der anderen Stoffgruppe (Wasserphase) sehr groß ist. Ein solcher Aufbau der Anlage 10 zur Ausführung des Verfahrens wird auch dann gewählt, wenn die Kondensierbarkeit der am Ende der Pervaporationseinrichtungen 28, 29 ausgedampften Permeate unterschiedlich ist und die Leistungscharakteristik der eingesetzten Membranen des Parallelprozesses ein unterschiedliches Vakuum verlangen.

Wie bei der Anlage 10 gemäß Fig. 1 sind auch bei der Anlage 10 gemäß Fig. 2 die wichtigen Steuerparameter des Verfahrens, neben der Membranauswahl, die Betriebstemperatur, das Betriebsvakuum und die Kondensationstemperatur. Vom Grundprinzip her arbeitet die Anlage 10 gemäß Fig. 2 genau so wie die Anlage 10 gemäß Fig. 1. Lediglich der mit der organisch belasteten Wasserphase I beaufschlagte Puffertank 20 ist um ein Vielfaches größer dimensioniert als der für die wassergesättigte organische Phase II vorgesehene Puffertank 19 und dessen nachfolgender Anlagenteil . Dieses ist immer dann sinnvoll, wenn die wassergesättigte organische Phase II den wesentlich größeren Anteil ausmacht oder diese im Vergleich zum organisch gelösten Anteil in der Wasserphase sehr hohe Wassergehalte aufweist. Von Zeit zu Zeit kann über die Leitung 27 gemäß der Anlage von Fig. 2 zusätzlich der Sumpf des Puffertanks 20 auf nachträglich ausgetretenem, ungelöstem Wasser in den Sammelbehälter 38 abgelassen werden.

Prinzipiell arbeitet auch der Anlagenteil für die organisch belastete Wasserphase identisch zu der in Fig. 1 gezeigten Anlage 10.

Für den Fall, daß es sich bei den organischen Komponenten der wassergesättigten organischen Phase um sehr leicht siedende oder hochtoxische Stoffe handelt, kann eine Kondensationsvariante mit Ausfriertechnik gewählt werden, bei der die dafür vorgesehenen beiden Kondensatoren 330, 331 mit Kälteträgern beaufschlagt werden. Da die Permeatdämpfe, die an der Leitung 32 aus der Pervaporationseinrichtung 28 austreten, in den Kondensatoren 330, 331 teilweise fest ausfrieren, können diese alternativ beaufschlagt werden, während zeitgleich die jeweils andere Seite aufgetaut wird und das geschmolzene Kondensat in den Sammelbehälter 38 abgeleitet wird. Dies erfordert eine Reihe von im einzelnen nicht gesondert bezeichneten Umschalt-, Absperr- und Belüftungsarmaturen. Diese Form der Kondensation ist dann erforderlich, wenn kleine Mengen hochtoxischer Stoffe anfallen, die auf keinen Fall über die Vakuumpumpen über deren Ausstoßseite in die Luft gelangen dürfen. Über die Förderpumpe 40, die am Ausgang des Sammelbehälters angeordnet ist, werden die gesammelten Permeate, ebenso wie beim Ausführungsbeispiel gemäß Fig. 1, über die Leitung 39 wiederum zur Schließung des Kreisprozesses in den Absetzbehälter 12 befördert.

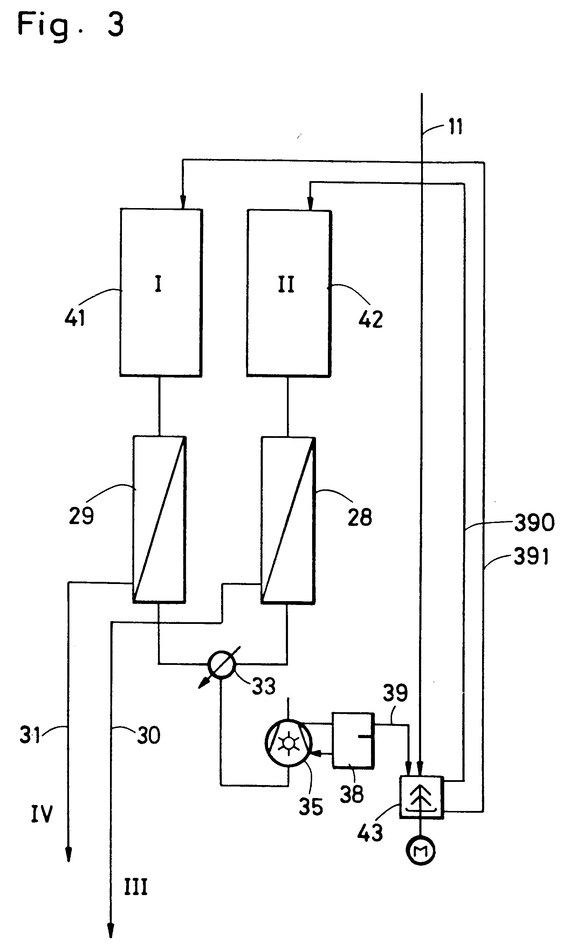

Bei dem Ausführungsbeispiel gemäß Fig. 3 sind Anlagenteile, die im Zusammenhang mit den Ausführungsbeispielen von Fig. 1 und 2 beschrieben wurden, zur Vereinfachung weggelassen worden. Das Ausführungsbeispiel gemäß Fig. 3 unterscheidet sich von den beiden vorangegangenen dadurch, daß anstelle des Absetzbehälters 12, in dem ein erster Trennschritt des zugeführten Gemisches 11 durch Schwerkraftwirkung erreicht wird, weggelassen ist. Anstelle des Absetzbehälters 12 ist eine Zentrifuge 43 bzw. ein Koaleszer angeordnet, der die Auftrennung des Gemisches 10 in eine organisch belastete Wasserphase I und eine wassergesättigte organische Phase II übernimmt. Diese modifizierte Anlage 10 wird vorzugsweise dann gewählt, wenn die Rohgemische Emulsionen sind oder zur Emulsionsbildung neigen. Die durch die Zentrifuge bzw. den Koaleszer 43 getrennten Phasen I, II werden in Pufferbehälter 41, 42 geleitet und von dort wiederum in die Pervaporationseinrichtungen 28, 29, wie in den vorangehend beschriebenen Ausführungsbeispielen, gebildet.

Zur Erzeugung eines Vakuums wird bei dem Ausführungsbeispiel gemäß Fig. 3 eine Vakuumpumpe 35 in Form einer Flüssigkeitsringpumpe benutzt, bei der die Permeate, die am Kondensator 33 gebildet werden, unter Vermischung mit der Ringflüssigkeit der Pumpe (Wasser) in einen Sammelbehälter 38 gelangen, der gleichzeitig als Ringflüssigkeitsbehälter dient. Durch den kontinuierlichen Nachlauf der Permeate bildet sich am Sammelbehälter 38 ein Überlauf, der zur weiteren Bearbeitung wiederum über die Leitung 39 in der Zentrifuge bzw. den Koaleszer 43 läuft und dort wie das ständig der Anlage 10 zugeführte Gemisch 11 behandelt wird.

Beim Betrieb aller drei in den Figuren 1 bis 3 beschriebenen Anlagenvarianten wird zum Schutz der Umwelt bei Betriebsstörungen oder Membranleistungsverlust eine einfache Sicherheitsabschaltung dadurch erreicht, daß lediglich die Zulaufventile zu den Pervaporationseinrichtungen 28, 29 zu regeln oder ggf. zu schließen sind. Durch Analysesignale des Wassergehalts des Retentats der organischen Phasen kann zudem deren Zulauf gegenüber einem eingestellten Bezugswert geregelt werden. Die organische Restlast des Wassers wird ebenfalls entsprechend zur Regelgröße für den Zulauf zur dafür vorgesehenen Pervaporationseinrichtung 28. So können beispielsweise Dichteschwinger, Differentialrefraktometer oder ähnliche Geräte als Signalgeber das in den Anlagen 10 ablaufende Verfahren zuverlässig steuern. Bei Membranbeschädigungen oder Ausfall der Membran können Schwimmerschalter wirksam werden, die an einer tiefen Stelle des Permeatraums der Pervaporationseinrichtungen 28, 29 angeordnet sind, und die bei Flüssigkeitsdurchtritt entsprechende Regelventile für den Zulauf der Phasen I, II sofort schließen, während die Inhalte der Membranräume auf unproblematische Weise noch in den Sammelbehälter 38 gesogen werden können. Die gleiche Funktion können Druckmeßsensoren im Permeatraum übernehmen, die bei Druckanstieg die Zuläufe zu den Pervaporationseinrichtungen 28, 29 sperren.

Zusammenfassend kann gesagt werden, daß die erfindungsgemäß möglichen sehr einfachen Sicherheitsvorkehrungen und unkomplizierten Notabschalteinrichtungen und Maßnahmen bei den bekannten Hybridtechniken mit Destillation oder Umkehrosmose oder noch komplizierteren Systemen auch in Kombination mit Pervaporationsprozessen unmöglich sind.

Beispiele für die Membranbestückung der parallelen Moduleinrichtungen:
Austrag des Wassers aus der organischen Phase:

| Membrantyp | geeignet für den Austrag von Wasser |
| --- | --- |
| Polyethylencarboxylat-Membranen<br>Polyethylensulfonsäure-Membranen<br>Acetyl-Cellulosemembranen | nicht bei Naphtenen und Aliphaten<br>nicht bei Naphtenen und Aliphaten<br>nicht bei Halogenkohlenwasserstoffen<br>und Ketonen, sonst generell einsetzbar |

| Regenerat-Cellulose | generell |
|---|---|
| Ionenaustauscher-Membranen (Polyelektrolyte) auf Basis von Acrylsäure, Divinylbenzolsulfonsäure | nicht in Medien, die lösend auf die Matrix wirken |
| Perfluorsulfonsäure | nicht bei Alkoholen |
| Polytertiäramine | nicht in verseifenden Medien |
| Poly-Quartärammoniumsalze | nicht in verseifenden Medien |
| Polyamide | nicht bei Halogenkohlenwasserstoffen |

Beispiele für die Membranbestückung der parallelen Moduleinrichtungen:

Austrag der organischen Komponenten aus der Wasserphase:

| Membrantyp | geeignet für |
|---|---|
| Silicon-Membranen | Aromaten, Aliphaten |
| PVDF-Membranen | Ester, Ketone, Ether |
| Mikroporöse PTFE-Membranen | Mineralölkomponenten, etherische Öle, Styrol |
| Polypropylen-Membranen mit oder ohne Mikroporenstruktur | Olefine, Naphtene |
| Polyvinylisobutylether Membranen | Carbonsäuren, Halogenkohlenwasserstoffe |
| Polyether-Blockamid Membranen | Aromaten, höhere Alkohle Halogenkohlenwasserstoffe, |
| Polyetherurethan Membranen | Fluorchlorkohlenwasserstoffe Vergaserkraftstoffe, Kerosin |
| Chlorkautschuk Membranen | Ketone, Ester, Aromaten Hal. Kohlenwasserstoffe |

Beispiel zum Verfahren

Reinigung eines Gemisches nach Tankwäsche eines Chemikalientankers.

(Mono-Styrol Transport)

| Zusammensetzung des Gemisches | 4 % Styrol (enth. 20 ppm 1,2 Dihydroxi-4-tert.-butylbenzol) 96 % Wasser, enth. 1200 ppm gelöste anorg. Salze, Natriumchlorid + Härtebildner |
|---|---|
| Menge Rohgemisch | 25 000 Kg |
| Betriebstemperatur | 298 K |
| Aufarbeitungszeit | 24 h |

Nach Passieren des Separators werden 2 Phasen erhalten:

1 000 Kg Styrolphase mit 400 ppm gelöstem Wasser + 20 ppm 1,2 DHTBB
24 000 Kg Wasserphase mit 225 ppm Styrol + anorg. Salze

---

Membrantyp 1 (Styoltrocknung) : Acetyl-Cellulose 2,5

Membranfläche 1                : 6 m$^2$

Membrantyp 2(Wasserentgiftung): Polyetherblockamid

Membranfläche 2                : 31 m$^2$

Betriebsvakuum                 : unter 5 mBar

interner Rücklauf über

Rückführungspumpe              : 0,7 % (entspre. 7,2
                                 Kg/h)

Zusammensetzung Rücklauf       : 10,2 % Styrol
                                 89,8 % Wasser

---

Produkt 1 :  41,67 Kg/h Styrol mit 20 ppm Stabilisator
             (DHTBB) und unter 10 ppm Wasser

             direkt prozeßtauglich
             =====================

Produkt 2 :  1 000 Kg/h gereinigtes Wasser, enthält unter
             10 ppm  Styrol und 1 200 ppm gelöste anor-
             ganische Salze

         erfüllt die Abwassereinleitungsverordnung,
         kann direkt abgeleitet oder erneut genutzt werden
         =================================================

Bezugszeichenliste

| 10 | Anlage |
| 11 | Gemisch |
| 12 | Phasenseparationsbehälter |
| 13 | organische belastete Wasserphase I |
| 14 | wassergesättigte organische Phase II |
| 15 | Leitung |
| 16 | 3-Wegeventil |
| 17 | Leitung |
| 18 | Leitung |
| 19 | Puffertank |
| 20 | Puffertank |
| 21 | Abscheider (Wasser) |
| 22 | Abscheider (organische Verbindung) |

8

| 23 | Leitung |
|----|---------|
| 24 | Leitung |
| 25 | Leitung |
| 26 | Leitung |
| 27 | Leitung |
| 28 | Pervaporationseinrichtung |
| 29 | Pervaporationseinrichtung |
| 30 | Retentatabflußleitung (Wasser III) |
| 31 | Retentatabflußleitung (organisches Fluid IV) |
| 32 | Leitung |
| 33 | Kondensator |
| 330 | Kondensator |
| 331 | Kondensator |
| 34 | Leitung |
| 35 | Vakuumpumpe |
| 350 | Vakuumpumpe |
| 36 | Leitung |
| 37 | Leitung |
| 38 | Sammelbehälter |
| 39 | Leitung |
| 390 | Leitung |
| 391 | Leitung |
| 40 | Förderpumpe |
| 41 | Pufferbehälter |
| 42 | Pufferbehälter |
| 43 | Zentrifuge/Koaleszer |

**Patentansprüche**

1. Verfahren zur Trennung und Rückgewinnung der Komponenten von Gemischen (11) aus organischen Verbindungen und Wasser in einem Pervaporationsprozeß mit Hilfe von Membranen, dadurch gekennzeichnet, daß

   a. zunächst das Gemisch (11) in eine organisch belastete Wasserphase I (13) und in eine wassergesättigte organische Phase II (14) aufgetrennt wird,

   b. anschließend die organisch belastete Wasserphase I (13) einerseits und die wassergesättigte organische Phase II (14) andererseits parallelen, unterschiedlichen Pervaporationsprozessen unterworfen werden, wobei die dabei entstehende Retentate einerseits als Wasser III (30) und andererseits als organisches Fluid IV (31) abgegeben werden und

   c. die bei den Pervaporationsprozessen entstehenden Permeate dem zu trennenden Gemisch (11) erneut zugeführt werden.

2. Verfahren nach Anspruch 1, dadurch gekennzeichnet, daß nach der Trennung des Gemisches (11) in eine organisch belastete Wasserphase I (13) und in eine wassergesättigte organische Phase II (14) diese zunächst getrennt parallelen Abscheideprozessen unterworfen werden.

3. Verfahren nach Anspruch 2, dadurch gekennzeichnet, daß die Abscheideprozesse mittels Schwerkraft und/oder einem Koaleszer ausgeführt werden.

4. Verfahren nach einem oder beiden der Ansprüche 2 oder 3, dadurch gekennzeichnet, daß die bei den Abscheideprozessen abgetrennten Minderkomponenten dem zu trennenden Gemisch (11) erneut zugeführt werden.

5. Verfahren nach einem oder mehreren der Ansprüche 1 bis 4, dadurch gekennzeichnet, daß das/die Permeat(e) vor der Zuführung in das zu trennende Gemisch (11) zur flüssigen oder festen Phase kondensiert werden.

6. Verfahren nach einem oder mehreren der Ansprüche 1 bis 5, dadurch gekennzeichnet, daß der Pervaporationsprozeß für die Trennung der wassergesättigten organischen Phase II (14) und der organisch belasteten Wasserphase I (13) bei unterschiedlichem Vakuum und getrennt voneinander abläuft.

7. Verfahren nach Anspruch 6, dadurch gekennzeichnet, daß die Permeate beider Phasen I, II (13,14) vor der Kondensation gemischt werden.

8. Verfahren nach einem oder mehreren der Ansprüche 1 bis 7, dadurch gekennzeichnet, daß die Permeate vor der Zuführung in das zu trennende Gemisch (11) gemeinsam gesammelt werden.

9. Verfahren nach einem oder mehreren der Ansprüche 1 bis 8, dadurch gekennzeichnet, daß das Gemisch (11) mittels Schwerkraft in die organisch belastete Wasserphase I (13) und in die wassergesättigte organische Phase II (14) aufgetrennt wird.

10. Verfahren nach einem oder mehreren der Ansprüche 1 bis 8, dadurch gekennzeichnet, daß das Gemisch (11) mittels eines Zentrifugenprozesses oder eines Koaleszers in die organisch belastete Wasserphase I (13) und in die wassergesättigte organische Phase II (14) aufgetrennt wird.

11. Verfahren nach einem oder mehreren der Ansprüche 1 bis 10, dadurch gekennzeichnet, daß die Retentate III, IV (30,31) auf in ihnen enthaltene Permeatanteile zur Ermittlung einer Regelgröße zyklisch selbsttätig analysiert werden, wobei in Abhängigkeit von der ermittelten Regelgröße die Zulaufgeschwindigkeit der organisch belasteten Wasserphase I (13) und der wassergesättigten organischen Phase II (14) zu den jeweiligen Pervaporationsprozessen geregelt wird.

12. Verfahren nach einem oder mehreren der Ansprüche 1 bis 10, dadurch gekennzeichnet, daß bei unmittelbar nach Austritt aus den Pervaporationsprozessen erkannten flüssigen Permeatanteilen der Verfahrensablauf automatisch wenigstens teilweise unterbrochen wird.

13. Verfahren nach einem oder mehreren der Ansprüche 1 bis 12, dadurch gekennzeichnet, daß bei als nicht typisch erkanntem Druck auf der Permeatseite der Pervaporationsprozesse der Verfahrensablauf automatisch wenigstens teilweise unterbrochen wird.

**Claims**

1. Process for the separation and recovery of the components of mixtures (11) of organic compounds and water in a pervaporation process with the aid of membranes, characterised in that,
   (a) the mixture (11) is initially separated into an aqueous phase charged with organic compounds I, (13) and into an organic phase saturated with water II, (14),
   (b) the aqueous phase charged with organics I, (13) on the one hand and the organic phase saturated with water II, (14) on the other hand are then subjected to differing parallel pervaporation processes whereby the dialysis residues which occur on the one hand consist of water III (30) and on the other hand they consist of organic fluid IV (31), and
   (c) the permeates occurring in the pervaporation processes are recycled again to the mixture to be separated (11).

2. Process in accordance with Claim 1, characterised in that, after the separation of the mixture (11) into an aqueous phase charged with organics I, (13) and into an organic phase saturated with water II, (14) these are then subjected to separate parallel separation processes.

3. Process in accordance with Claim 2, characterised in that, the separation processes are carried out by means of gravity and/or a coalescing device.

4. Process in accordance with one or both Claims 2 or 3, characterised in that, the minor components which are separated in the separation processes are recycled again to the mixture to be separated (11).

5. Process in accordance with one or more of Claims 1 to 4, characterised in that, the permeate(s) is(are) condensed to liquid or solid phases before being recycled to the mixture to be separated (11).

6. Process in accordance with one or more of Claims 1 to 5, characterised In that, the pervaporation processes for the separation of the organic phase saturated with water II, (14) and the aqueous phase charged with organics I, (13) are carried out at differing vacuum and are separate from one another.

7. Process in accordance with Claim 6, characterised in that, the permeates of the two phases I, II (13, 14) are mixed before condensation.

8. Process in accordance with one or more of Claims 1 to 7, characterised in that, the permeates are collected together before recycling to the mixture to be separated (11).

9. Process in accordance with one or more of Claims 1 to 8, characterised in that, the mixture (11) is separated by means of gravity into the aqueous phase charged with organics I, (13) and into the organic phase saturated with water II, (14).

10. Process in accordance with one or more of Claims 1 to 8, characterised in that, the mixture (11) is separated by means of a centrifugal process or a coalescing device into the aqueous phase charged with organics I, (13) and into the organic phase saturated with water II, (14).

11. Process in accordance with one or more of Claims 1 to 10, characterised in that, the dialysis residues III, IV (30, 31) are repeatedly and automatically analysed for the amount of permeate present in order to obtain a control parameter, whereby the refeed rate of the aqueous phase charged with organics I, (13) and the organic phase saturated with water II, (14) to the respective pervaporation processes is regulated depending on the control parameter which is obtained.

12. Process In accordance with one or more of Claims 1 to 10, characterised in that, the course of the process Is automatically interrupted, at least in part, immediately after the escape of detected liquid amounts of permeate from the pervaporation processes.

13. Process in accordance with one or more of Claims 1 to 12, characterised in that, the course of the process is automatically Interrupted, at least in part, when the pressure on the permeate side of the pervaporation process is detected to be atypical.

**Revendications**

1. Procédé pour séparer et récupérer les constituants de mélanges (11) formés de composés organiques et d'eau, dans un procédé de pervaporation à l'aide de membranes, caractérisé en ce que
   a. tout d'abord on sépare le mélange (11) en une phase aqueuse chargée organiquement I I (13) et en une phase organique saturée d'eau II (14),
   b. ensuite, on soumet la phase aqueuse chargée organiquement I (13) et d'autre part la phase organique saturée d'eau II (14) à différents processus parallèles de pervaporation, les rétentats alors obtenus étant délivrés d'une part sous la forme d'eau III (30) et d'autre part sous la forme d'un fluide organique IV (31), et
   c. les perméats, qui apparaissent lors des processus de pervaporation, sont à nouveau envoyés au mélange (11) devant être séparé.

2. Procédé selon la revendication 1, caractérisé en ce qu'après la séparation du mélange (11) en une phase aqueuse chargée organiquement I (13) et en une phase organique saturée d'eau II (14), on soumet ces phases tout d'abord à des processus de séparation parallèles séparés.

3. Procédé selon la revendication 2, caractérisé en ce que les processus de séparation sont exécutés sous l'action de la force de pesanteur et/ou à l'aide d'un dispositif de coalescence.

4. Procédé selon une ou les deux des revendications 2 ou 3, caractérisé en ce que les constituants secondaires, séparés lors des processus de séparation, sont à nouveau envoyés au mélange (11) à séparer.

5. Procédé selon une ou plusieurs des revendications 1 à 4, caractérisé en ce que le/les perméat(s) sont condensés avant leur envoi au mélange (11) devant être séparé, sous la forme de la phase liquide ou

11

solide.

6.   Procédé selon une ou plusieurs des revendications 1 à 5, caractérisé en ce que le processus de pervaporation pour la séparation de la phase organique saturée d'eau II (14) et de la phase aqueuse chargée organiquement I (13) se déroule sous des vides différents et d'une manière séparée pour ces phases.

7.   Procédé selon la revendication 6, caractérisé en ce que les perméats des deux phases I, II (13, 14) sont mélangés avant la condensation.

8.   Procédé selon une ou plusieurs des revendications 1 à 7, caractérisé en ce que les perméats sont rassemblés en commun avant leur envoi au mélange à séparer (11).

9.   Procédé selon une ou plusieurs des revendications 1 à 8, caractérisé en ce que le mélange (11) est séparé au moyen de la force de pesanteur en la phase aqueuse chargée organiquement I (13) et en la phase organique saturée d'eau II (14).

10.  Procédé selon une ou plusieurs des revendications 1 à 8, caractérisé en ce que le mélange (11) est séparé au moyen d'un processus de centrifugation ou à l'aide d'un dispositif de coalescence en la phase aqueuse chargée organiquement I (13) et en la phase organique saturée d'eau II (14).

11.  Procédé selon une ou plusieurs des revendications 1 à 10, caractérisé en ce que les parties de perméat, que contiennent les rétentats III, IV (30, 31), sont analysées automatiquement de façon cyclique pour la détermination d'une grandeur de réglage, auquel cas la vitesse d'amenée de la phase aqueuse chargée organiquement I (13) et de la phase organique saturée d'eau II (14) aux processus respectifs de pervaporation est réglée en fonction de la grandeur de réglage déterminée.

12.  Procédé selon une ou plusieurs des revendications 1 à 10, caractérisé en ce que, dans le cas de parties liquides du perméat, qui sont identifiées directement lors de la sortie à partir des processus de pervaporation, le cycle opératoire est interrompu automatiquement au moins partiellement.

13.  Procédé selon une ou plusieurs des revendications 1 à 12, caractérisé en ce que, dans le cas d'une pression identifiée comme non typique appliquée aux côtés du perméat dans les processus de pervaporation, le cycle opératoire est interrompu automatiquement au moins partiellement.

# Fig. 1

# Fig. 2

# Fig. 3